# EUROPEAN PATENT APPLICATION

(11) **EP 4 687 231 A1**
(43) Date of publication of application: **04.02.2026**
(21) Application number: 25154473.0
(22) Date of filing: 28.01.2025
(51) Int. Cl.: H01R 13/72, H02G 3/10, H02G 11/02

(54) **CHARGING EQUIPMENT**

(30) Priority: 30.07.2024 CN 202411031899
(71) Applicant: Delta Electronics, Inc., Taoyuan City 33341 (TW)
(72) Inventor: LO, Shih-Chi, Taoyuan City (TW); LIN, Kun-Chi, Taoyuan City (TW)
(74) Representative: 2K Patentanwälte Blasberg Kewitz & Reichel

(57) **Abstract**

Charging equipment is provided. The charging equipment includes a base plate, a cable reel, a cable, a charging head, a panel, and a housing. The base plate is disposed on a surface of a wall. The cable reel is disposed on the backside of the base plate, embedded inside the wall. The cable is stowed in the cable reel, wherein a front end of the cable extends from the backside of the base plate to a front side of the base plate. The charging head is connected to the front end of the cable. The panel is disposed on the front side of the base plate. The charging head is stowed and positioned in the panel in an accommodated state. The housing is disposed on the front side of the base plate, covering at least a part of the panel, the charging head, and the cable.

## Description

### CROSS REFERENCE TO RELATED APPLICATIONS

This Application claims priority of China Patent Application No. 202411031899.3, filed on July 30, 2024, the entirety of which is incorporated by reference herein.

### BACKGROUND OF THE INVENTION

### Field of the Invention

The present invention relates to charging equipment, and, in particular, to charging equipment with a cable reel.

### Description of the Related Art

At present, charging sockets are provided in some public facilities for public use. However, people often need to bring their own charging cables in order to charge their personal devices. If they do not have a charging cable with them, they cannot use the charging sockets.

In addition, charging sockets in public facilities are often located on the wall. When charging, users need to hold their personal devices at all times without being able to put them down until the charging is completed, which is inconvenient.

Therefore, there is a need for charging equipment that is highly convenient and suitable for outdoor public spaces.

### BRIEF SUMMARY OF THE INVENTION

According to some embodiments of the present disclosure, a charging equipment includes a base plate, a cable reel, a cable, a charging head, a panel, and a housing. The base plate is disposed on a surface of a wall. The cable reel is disposed on the backside of the base plate, embedded inside the wall. The cable is stowed in the cable reel, wherein a front end of the cable extends from the backside of the base plate to a front side of the base plate. The charging head is connected to the front end of the cable. The panel is disposed on the front side of the base plate. The charging head is stowed and positioned in the panel in an accommodated state. The housing is disposed on the front side of the base plate, covering at least a part of the panel, the charging head, and the cable

In some embodiments, the charging head includes a plug portion. The direction in which the plug portion extends is perpendicular to the direction in which the cable extends.

In some embodiments, the charging head further includes a gripping portion that is located at the intersection of the direction in which the plug portion extends and the direction in which the cable extends. The gripping portion has a back surface that is connected to the plug portion, an upper surface that is connected to the cable, and two side surfaces that are orthogonal to the back surface and the upper surface.

In some embodiments, the two side surfaces are curved surfaces.

In some embodiments, the charging head further includes a tongue portion that is connected to the gripping portion and is disposed on a lower surface that is parallel to the upper surface.

In some embodiments, the direction in which the tongue portion extends is parallel to the direction in which the cable extends.

In some embodiments, the panel includes a charging head-storing portion and a cable-storing portion. The charging head-storing portion accommodates the charging head, and has an external shape corresponding to the contours of the charging head and a concave portion corresponding to the plug portion. The cable-storing portion accommodates a part of the cable, and has an external shape corresponding to the contours of the cable and a hole that is adapted to guide the cable toward the cable reel.

In some embodiments, the panel further includes a guiding portion that is disposed on one end of the cable-storing portion that is close to the charging head-storing portion

In some embodiments, the guiding portion has two protruding components, respectively disposed on two sidewalls of the cable-storing portion.

In some embodiments, the edges of the charging head-storing portion, the cable-storing portion, and the guiding portion all have rounded corners.

In some embodiments, the housing includes a bottom plate and an outer casing. The bottom plate is disposed on the base plate. The outer casing is pivoted to the bottom plate through a plurality of pivot components. The outer casing is pivotable relative to the bottom plate.

In some embodiments, the outer casing has an opening that is located on the opposite side from the pivot components.

In some embodiments, the outer casing further has a supporting component that is located on the same side as the opening.

In some embodiments, the supporting component includes a holder portion and a stopper portion. The holder portion is disposed on the surface of the outer casing and extends in a direction away from the panel and perpendicular to the surface of the outer casing. The stopper portion is connected to the holder portion. The stopper portion is perpendicular to the holder portion and extends parallel to the surface of the outer casing.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1 shows a perspective view of the charging equipment, in accordance to some embodiments of the present disclosure, wherein the broken lines represent the housing in a closed state.
FIG. 2 shows a perspective view of the charging equipment, in accordance to some embodiments of the present disclosure, wherein the broken lines represent the housing in an open state.
FIG. 3 shows a front view of the charging equipment, in accordance to some embodiments of the present disclosure.
FIG. 4 shows a rear view of the charging equipment, in accordance to some embodiments of the present disclosure.
FIG. 5 shows a zoomed-in perspective view of the part of cable and charging head, in accordance to some embodiments of the present disclosure.
FIG. 6 shows a front view of the panel, in accordance to some embodiments of the present disclosure.
FIG. 7 shows a perspective view of the housing in an open state, in accordance to some embodiments of the present disclosure.

### DETAILED DESCRIPTION OF THE INVENTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact.

In addition, the present disclosure may repeat reference numerals and/or letters in the various embodiments. This repetition is for the purpose of simplicity and clarity and does not in itself dictate a relationship between the various embodiments and/or configurations discussed. Moreover, the formation of a feature on, connected to, and/or coupled to another feature in the present disclosure that follows may include embodiments in which the features are formed in direct contact, and may also include embodiments in which additional features may be formed interposing the features, such that the features may not be in direct contact. In addition, spatially relative terms, for example, "vertical," "above," "over," "below,", "bottom," etc. as well as derivatives thereof (e.g., "downwardly," "upwardly," etc.) are used for ease of the present disclosure of one features relationship to another feature. The spatially relative terms are intended to cover different orientations of the device including the features.

The charging equipment 1000 of the present disclosure is designed to allow the public to charge their own personal mobile devices and the like. Therefore, the charging equipment 1000, unlike a general device that only provides a charging socket, provides a cable and a charging head necessary for charging, so that the public can charge their personal mobile devices, etc., without having to bring a charging cable of their own.

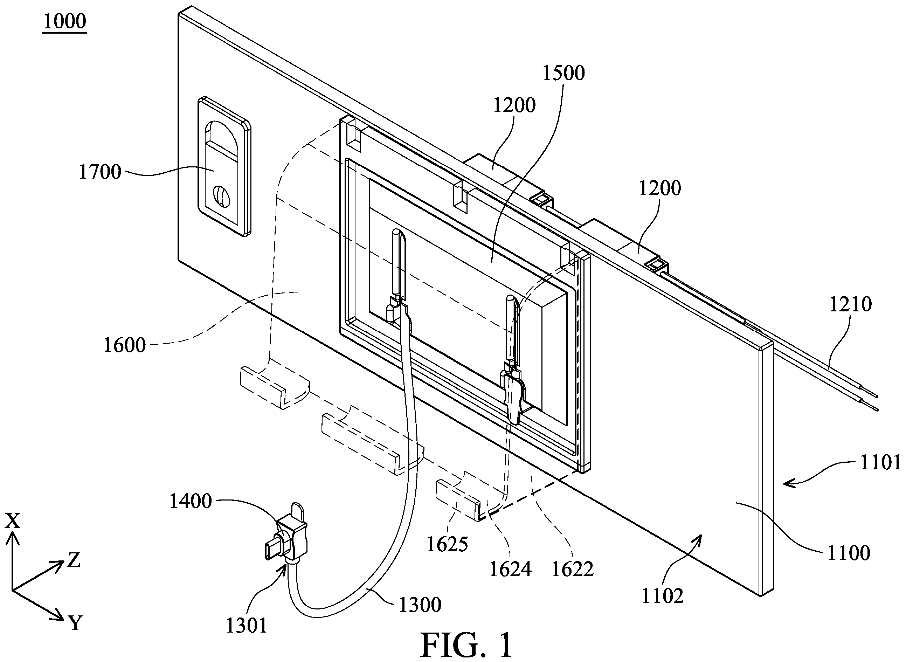

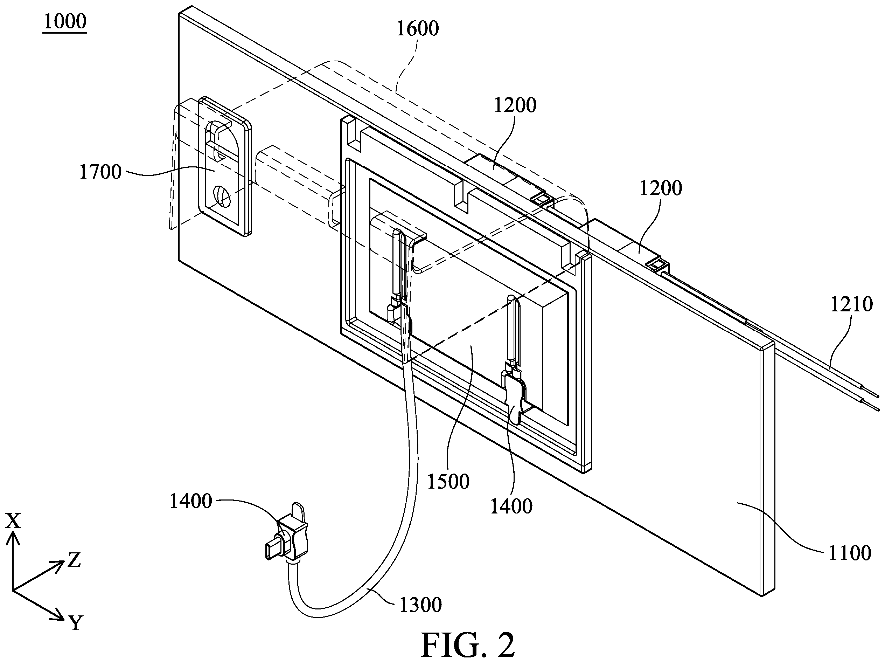

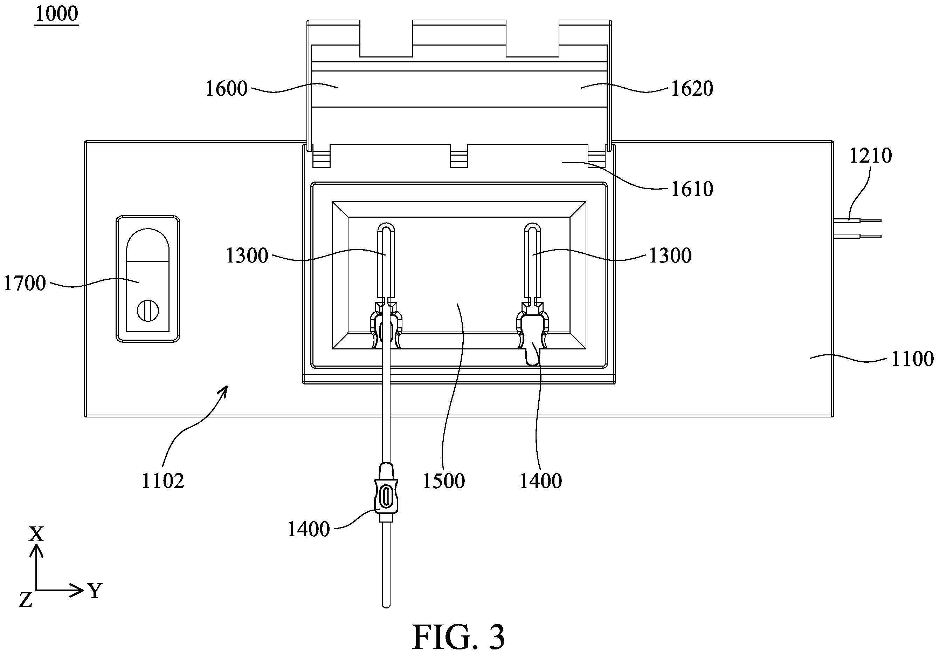

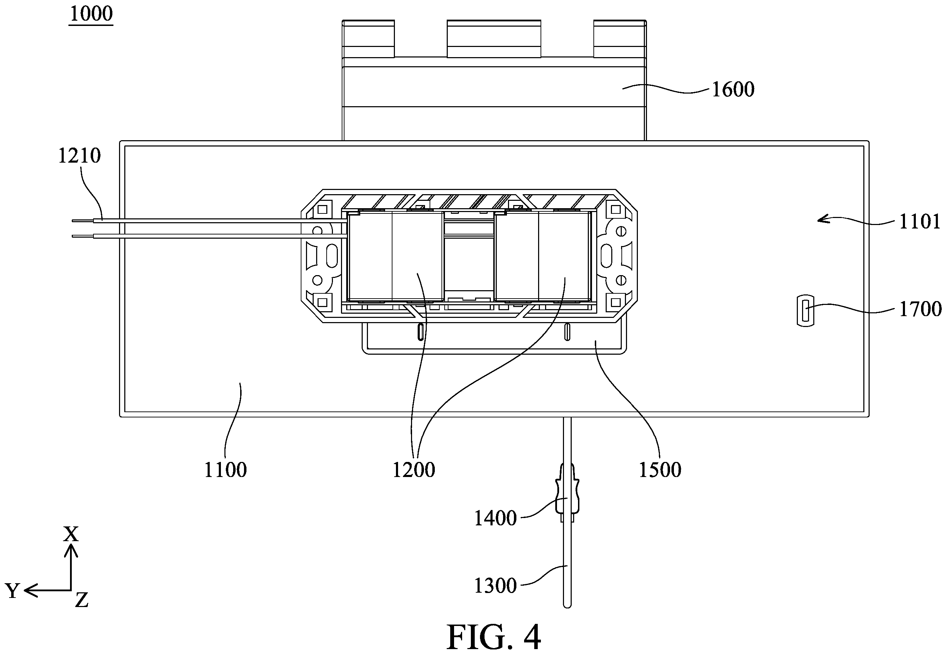

Referring to FIGs. 1 to 4, FIG. 1 shows a perspective view of the charging equipment 1000, in accordance to some embodiments of the present disclosure, wherein the broken lines represent the housing 1600 in a closed state; FIG. 2 shows a perspective view of the charging equipment 1000, in accordance to some embodiments of the present disclosure, wherein the broken lines represent the housing 1600 in an open state; FIG. 3 shows a front view of the charging equipment 1000, in accordance to some embodiments of the present disclosure; FIG. 4 shows a rear view of the charging equipment 1000, in accordance to some embodiments of the present disclosure. In FIGs. 3 and 4, the housing 1600 is in the open state as well.

As shown in FIG. 1, the charging equipment 1000 mainly includes a base plate 1100, a cable reel 1200, a cable 1300, a charging head 1400, a panel 1500, and a housing 1600.

In some embodiments, the base plate 1100 is disposed on the surface of a wall (not shown). For the purpose of this article, "wall" refers to a wall surface or flat surface that is exposed. For example, a "wall" may be a wall surface located in a public area, such as a wall surface on the exterior of a building, the surface of a stop sign at a bus stop, the surface of a pole at a bus shelter, and any other suitable surface. In particular, the "wall" described herein can be located outdoors because the charging equipment 1000 is waterproof and sunproof. How the charging equipment 1000 is waterproof and sunproof will be further described below.

In some embodiments, the cable reel 1200 is disposed on the backside 1101 of the base plate 1100, and is embedded inside the aforementioned wall (not shown). In FIG. 1, although the wall is not illustrated, the wall is located between the base plate 1100 and the cable reel 1200. In fact, since the cable reel 1200 is embedded inside the wall, the cable reel 1200 is not exposed. For easy illustrative purpose, the wall is omitted in the drawings of the present disclosure to clearly show the position of the cable reel 1200.

Additionally, in the embodiment according to the present disclosure, when installing the charging equipment 1000, a space suitable for placing the cable reel 1200 may be dug out on the wall, and after placing the cable reel 1200 into this space, the backside 1101 of the base plate 1100 is then flatly affixed to the wall and is secured. In some embodiments, the base plate 1100 may be affixed to the wall by the securing device 1700. The securing device 1700 may be any suitable fixtures. For example, the base plate 1100 may be secured by the means of using bolts and screws, and the like.

In some embodiments, the cable 1300 is stowed in the cable reel 1200. The cable 1300 may be a charging cable that is suitable for charging. The length of the cable 1300 is not particularly limited. It can have any suitable length, depending on the actual location. Additionally, the type of the cable reel 1200 is not limited. It can be any winding device that is suitable for storing the cable 1300.

The front end 1301 of the cable 1300 extends from the backside 1101 of the base plate 1100 (i.e., in the cable reel 1200) to the front side 1102 of the base plate 1100. That is, the front end 1301 of the cable 1300 is exposed to the exterior of the wall, while the rest of the cable 1300 remains in the cable reel 1200. When in use, the front end 1301 of the cable 1300 may be pulled out to a desired length. At this time, the cable 1300 is released from the cable reel 1200 and extends outward, as shown by the cable 1300 on the left side of FIGs. 1 to 3. When the user finishes using and resets the cable 1300, as shown by the cable 1300 on the right side of FIGs. 1 to 3, the cable reel 1200 may accommodate the cable 1300 again.

In the embodiments shown in FIGs. 1 to 4, the charging equipment 1000 includes two cables 1300. Correspondingly, the charging equipment 1000 includes two cable reels 1200. The plurality of cables 1300 are each stowed in a respective cable reel 1200. However, the number of the cables 1300 and the cable reels 1200 are not limited thereto. The number may be determined based on actual needs.

In addition, referring to FIGs. 1 and 4, every cable reel 1200 may be connected to an electrically connecting portion 1210. The electrically connecting portion 1210 may be connected to an external power supply (now shown) for supplying electrical power to the cable 1300 in the cable reel 1200. The electrically connecting portion 1210 and the cable reel 1200 are both located on the backside 1101 of the base plate 1100 and are embedded inside the wall. Thus, they are not actually visible.

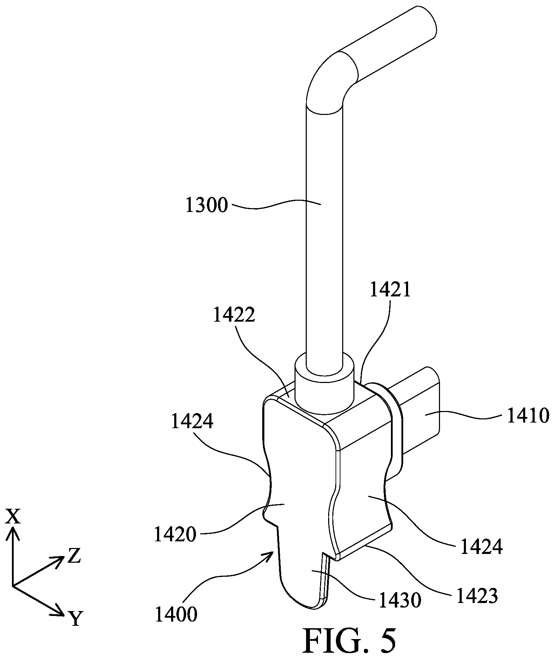

Next, the structure of the charging head 1400 will be described with reference to FIGs. 1 to 3 and 5. FIG. 5 shows a zoomed-in perspective view of the part of cable 1300 and charging head 1400, in accordance to some embodiments of the present disclosure.

In some embodiments, the charging head 1400 is connected to the front end 1301 of the cable 1300. In the drawings of the present disclosure, the charging head 1400 is illustrated as a USB Type-C connector, but the form of the charging head 1400 is not limited to this. One can choose the suitable connector according to the actual needs. In addition, in the embodiments where a plurality of cables 1300 are included, different cables 1300 may be connected to different types of charging heads 1400 to improve the compatibility of the charging equipment 1000.

In some embodiments, the charging head 1400 includes a plug portion 1410. As shown in FIG. 5, the direction in which the plug portion 1410 extends (Z direction) is perpendicular to the direction in which the cable 1300 extends (X direction). As such, the durability of the portion of the cable 1300 connected to the plug portion 1410 can be enhanced, and the cable 1300 will not be susceptible to abrasion and depletion as a result of repeated plugging and unplugging of the charging head 1400.

In some embodiments, the charging head 1400 further includes a gripping portion 1420 and a tongue portion 1430, so that users can grab the charging head 1400 with ease. As shown in FIG. 5, the gripping portion 1420 is located at the intersection of the direction in which the plug portion 1410 extends (Z direction) and the direction in which the cable 1300 extends (X direction). Additionally, the gripping portion 1420 has a back surface 1421 that is connected to the plug portion 1410, an upper surface 1422 that is connected to the cable 1300, a lower surface 1423 that is parallel to the upper surface 1422, and two side surfaces 1424 that are orthogonal to the back surface 1421 and the upper surface 1422. The two side surfaces 1424 are both curved surfaces instead of flat surfaces. As a result, users can grab the concave part of the side surface 1424 with fingers. It is easy to hold the charging head 1400, so that it will not slip off when inserting the charging head 1400 into the device to be charged.

As shown in FIG. 5, the tongue portion 1430 is connected to the gripping portion 1420 and is disposed on the lower surface 1423 of the gripping portion 1420. The tongue portion 1430 may be in a sheet-like shape and extends outward from the lower surface 1423. The direction in which the tongue portion 1430 extends (X direction) is parallel to the direction in which the cable 1300 extends (X direction). As shown in FIGs. 1 and 2, when the charging head 1400 is stowed in the panel 1500, the tongue portion 1430 protrudes from the panel 1500, so that it is convenient for users to pull out the charging head 1400 from the panel 1500 and use it.

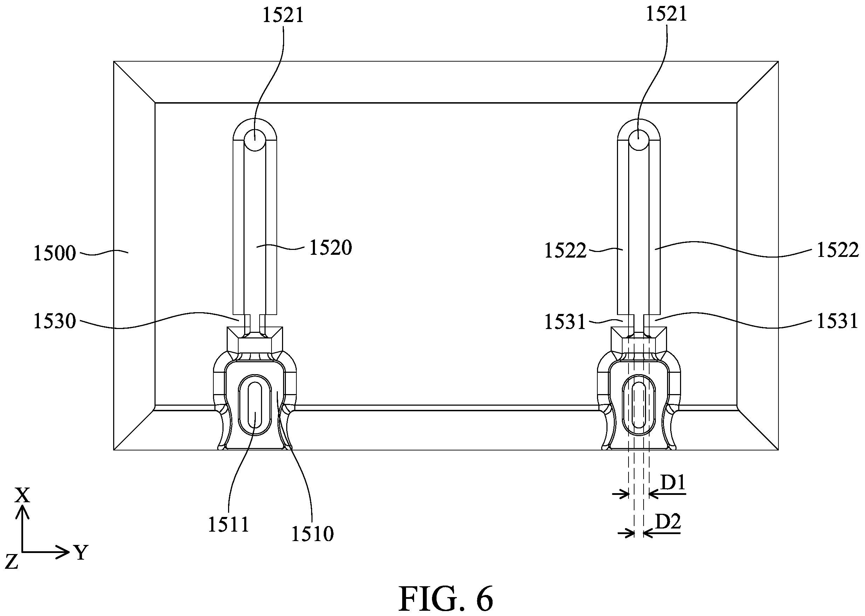

Next, the structure of the panel 1500 will be described with reference to FIGs. 1 to 3 and 6. FIG. 6 shows a front view of the panel 1500, in accordance to some embodiments of the present disclosure.

In some embodiments, the panel 1500 is disposed on the front side 1102 of the base plate 1100. The charging head 1400 may be stowed and positioned in the panel 1500 in an accommodated state. As shown in FIGs. 1 to 3, the charging head 1400 on the right side is in the unused state while it is stowed and positioned in the panel 1500, while the charging head 1400 on the left side is pulled out for use.

As shown in FIG. 6, for each charging head 1400 and each cable 1300, the panel 1500 has a charging head-storing portion 1510 and a cable-storing portion 1520. In the embodiments where two charging heads 1400 and two cables 1300 are included, the panel 1500 has two charging head-storing portions 1510 and two cable-storing portions 1520.

The charging head-storing portion 1510 accommodates the charging head 1400 and has an external shape corresponding to the contours of the charging head 1400 and a concave portion 1511 corresponding to the plug portion 1410. Specifically, the external shape of the charging head-storing portion 1510 is similar to the contours of the charging head 1400. The part that corresponds to the concave side surface 1424 of the charging head 1400 also has a concave shape to increase the stability of storing the charging head 1400. In addition, in the unused state, the plug portion 1410 may be placed inside the concave portion 1511 without being exposed, and may be protected from moisture or salt erosion or being affected.

The cable-storing portion 1520 accommodates a part of the cable 1300, especially the part that is exposed from the base plate 1100, and has an external shape corresponding to the contours of the cable 1300 and a hole 1521 that is adapted to guide the cable 1300 toward the cable reel 1200. Specifically, the cable-storing portion 1520 includes two sidewalls 1522. The two sidewalls 1522 are disposed in parallel, so that the cable 1300 is sandwiched between the two sidewalls 1522. The hole 1521 is disposed on top of the sidewalls 1522. The hole 1521 passes through the base plate 1100 and connects the backside 1101 and the front side 1102 of the base plate 1100. When being installed, the cable 1300 may go through this hole 1521 and enters the cable-storing portion 1520 from the cable reel 1200 at the backside 1101 of the base plate 1100. The charging head-storing portion 1510 is disposed beneath the sidewalls 1522, and is on the opposite side from the hole 1521. The cable 1300 is connected to the charging head 1400 here. When the cable 1300 is to be used, the user grasps the charging head 1400, thereby pulling the cable 1300 out of the cable reel 1200 through the hole 1521. When the cable 1300 returns to the unused state from the used state, the cable 1300 also returns to the cable reel 1200 by passing through the hole 1521.

In some embodiments, the panel 1500 further includes a guiding portion 1530. The guiding portion 1530 is disposed on one end of the cable-storing portion 1520 that is close to the charging head-storing portion 1510. As shown in FIG. 6, the guiding portion 1530 is disposed on the lower end of the cable-storing portion 1520 that is close to the charging head-storing portion 1510. The guiding portion 1530 may have two protruding components 1531 that are each disposed on the two sidewalls 1522 of the cable-storing portion 1520.

In the embodiment shown in FIG. 6, the shortest distance between the two sidewalls 1522 is referred to as the first distance D1, and the shortest distance between the two protruding components 1531 is referred to as the second distance D2. As shown in FIG. 6, the second distance D2 is smaller than the first distance D1. As such, when the cable 1300 is disposed inside the cable-storing portion 1520, the protruding components 1531 of the guiding portion 1530 may have the function of limiting the position of the cable 1300. When the cable 1300 is pulled out by user, the guiding portion 1530 ensures that the cable 1300 inside the cable-storing portion 1520 are remained inside the cable-storing portion 1520. When the cable 1300 is returned, the guiding portion 1530 may guide the cable 1300 to go through the hole 1521 along the cable-storing portion 1520 and back in the cable reel 1200.

In addition, in some embodiments, the edges of the charging head-storing portion 1510, the cable-storing portion 1520, and the guiding portion 1530 are all formed with rounded corners utilizing a rounding process. These edges are where the cable 1300 may collide during use. By rounding the edges, the stress on the cable 1300 during use can be reduced and the life of the cable 1300 can be extended.

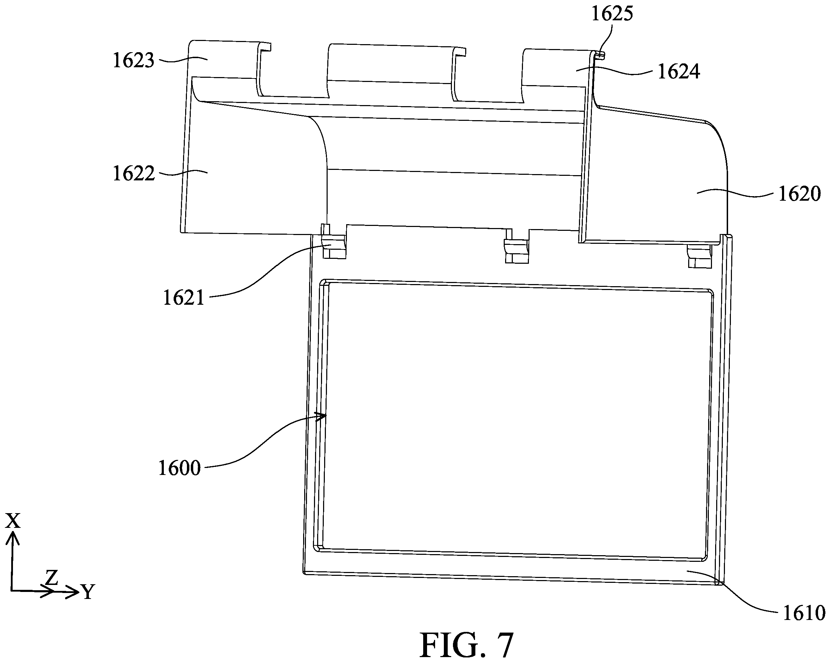

Next, the structure of the housing 1600 will be described with reference to FIGs. 1 to 3 and 7. FIG. 7 shows a perspective view of the housing 1600 in an open state, in accordance to some embodiments of the present disclosure.

The housing 1600 is disposed on the front side 1102 of the base plate 1100. In some embodiments, as shown in FIGs. 3 and 7, the housing 1600 includes a bottom plate 1610 and an outer casing 1620. The bottom plate 1610 may be affixed on the base plate 1100 and surrounds the panel 1500. The outer casing 1620 is pivoted to the bottom plate 1610 through a plurality of pivot components 1621, so that the outer casing 1620 is pivotable relative to the bottom plate 1610. As such, the housing 1600 may be rotated between an open state and a closed state. In the drawings of the present disclosure, three pivot components 1621 are illustrated. However, the number and the form of the pivot components 1621 are not limited to this. Suitable number and form may be chosen based on the size of the housing 1600.

The housing 1600 is for covering at least a part of the panel 1500, the charging head 1400, and the cable 1300. In the unused state, the housing 1600 may remain in the closed state, as shown in FIG. 1. In the closed state, the outer casing 1620 of the housing 1600 covers the panel 1500. If the cable 1300 and the charging head 1400 are stowed in the panel 1500, then the outer casing 1620 covers the cable 1300 and the charging head 1400 as well.

In some embodiments, the outer casing 1620 has an opening 1622 that is located on the opposite side from the pivot components 1621. Specifically, in the embodiment shown in FIG. 1, the pivot components 1621 are located on the outer casing 1620 that is close to +X direction, while the opening 1622 is located close to -X direction; in the embodiment shown in FIG. 7, the pivot components 1621 are located on the outer casing 1620 that is close to +Z direction, while the opening 1622 is located close to -Z direction.

As shown in the embodiment of FIG. 1, the location of the opening 1622 is close to where the charging head 1400 is stowed. Therefore, through the opening 1622, users can still grab the charging head 1400 in the closed state of the housing 1600. The charging head 1400 and the cable 1300 can still be pulled out without opening the housing 1600.

As shown in the embodiment of FIGs. 2 and 3, the user may also grab the charging head 1400 then pull out and use the cable 1300 after opening the housing 1600. In addition, after opening the housing 1600 and pulling out the charging head 1400 and the cable 1300, the user may close the housing 1600 as well to return it to the state shown in FIG. 1, in order to protect the charging equipment 1000 from being affected by the rain, sunlight, or dust. In fact, even in the open state, as shown in FIGs. 2 and 3, the outer casing 1620 can still block, for example, the rain and sunlight from above (+X direction), which prevents the cable 1300 and the charging head 1400 from being damage and extends the life of the charging equipment 1000.

As shown in FIG. 7, in some embodiments, the outer casing 1620 further has a supporting component 1623 that is located on the same side as the opening 1622. The supporting component 1623 may include a holder portion 1624 and a stopper portion 1625. The holder portion 1624 is disposed on the surface of the outer casing 1620 and extends in a direction away from the panel 1500 and perpendicular to the surface of the outer casing 1620. For example, in the embodiment of FIG. 1, the holder portion 1624 extends toward - Z direction, away from the panel 1500, and perpendicular to the surface of the outer casing 1620. The stopper portion 1625 is connected to the holder portion 1624. The stopper portion 1625 is perpendicular to the holder portion 1624 and extends parallel to the surface of the outer casing 1620.

As such, the holder portion 1624 and the stopper portion 1625 of the supporting component 1623 forms a supporting bracket. When the user uses the charging equipment 1000 to charge, they may close the housing 1600 and put their personal device on the supporting component 1623. This enhances convenience.

In some embodiments, the outer casing 1620 may be made of transparent materials, such as plastic materials. As such, in addition to being waterproof and sunproof, it also allows the user to see the inside of the housing 1600 and learn how the cable 1300 and charging head 1400 are being used.

In summary, the charging equipment 1000 according to the embodiments of the present disclosure allows the people to charge their personal devices without having to bring their own charging cables when using public facilities. It has the advantages of high convenience and high compatibility. By installing the cable reel 1200, the panel 1500, and the housing 1600, the cable 1300 and the charging head 1400 can be properly stored when not in use, and can be avoided from being affected by rain, sunlight, and flying dust that are likely to be encountered in the outdoor space, thus prolonging the service life of the charging equipment 1000. In addition, the structural design of the housing 1600 allows users to place their personal devices during charging, further enhancing convenience.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A charging equipment, comprising:
a base plate disposed on a surface of a wall;
a cable reel, disposed on a backside of the base plate, embedded inside the wall;
a cable stowed in the cable reel, wherein a front end of the cable extends from the backside of the base plate to a front side of the base plate;
a charging head connected to the front end of the cable;
a panel disposed on the front side of the base plate, wherein the charging head is stowed and positioned in the panel in an accommodated state; and
a housing, disposed on the front side of the base plate, covering at least a part of the panel, the charging head, and the cable.

2. The charging equipment as claimed in claim 1, wherein the charging head comprises a plug portion, and the direction in which the plug portion extends is perpendicular to the direction in which the cable extends.

3. The charging equipment as claimed in claim 2, wherein the charging head further comprises a gripping portion that is located at the intersection of the direction in which the plug portion extends and the direction in which the cable extends, and has a back surface that is connected to the plug portion, an upper surface that is connected to the cable, and two side surfaces that are orthogonal to the back surface and the upper surface.

4. The charging equipment as claimed in claim 3, wherein the two side surfaces are curved surfaces.

5. The charging equipment as claimed in claim 3, wherein the charging head further comprises a tongue portion that is connected to the gripping portion and is disposed on a lower surface that is parallel to the upper surface.

6. The charging equipment as claimed in claim 5, wherein the direction in which the tongue portion extends is parallel to the direction in which the cable extends.

7. The charging equipment as claimed in claim 2, wherein the panel comprises:
a charging head-storing portion that accommodates the charging head, having an external shape corresponding to the contours of the charging head and a concave portion corresponding to the plug portion; and
a cable-storing portion that accommodates a part of the cable, having an external shape corresponding to the contours of the cable and a hole that is adapted to guide the cable toward the cable reel.

8. The charging equipment as claimed in claim 7, wherein the panel further comprises a guiding portion that is disposed on one end of the cable-storing portion that is close to the charging head-storing portion.

9. The charging equipment as claimed in claim 8, wherein the guiding portion has two protruding components, respectively disposed on two sidewalls of the cable-storing portion.

10. The charging equipment as claimed in claim 9, wherein the edges of the charging head-storing portion, the cable-storing portion, and the guiding portion all have rounded corners.

11. The charging equipment as claimed in claim 1, wherein the housing comprises:
a bottom plate disposed on the base plate; and
an outer casing, pivoted to the bottom plate through a plurality of pivot components, wherein the outer casing is pivotable relative to the bottom plate.

12. The charging equipment as claimed in claim 11, wherein the outer casing has an opening that is located on the opposite side from the pivot components.

13. The charging equipment as claimed in claim 12, wherein the outer casing further has a supporting component that is located on the same side as the opening.

14. The charging equipment as claimed in claim 13, wherein the supporting component comprises:
a holder portion that is disposed on the surface of the outer casing and extends in a direction away from the panel and perpendicular to the surface of the outer casing; and
a stopper portion that is connected to the holder portion, wherein the stopper portion is perpendicular to the holder portion and extends parallel to the surface of the outer casing.
